(19) Europäisches Patentamt
European Patent Office
Office européen des brevets

(11) **EP 4 417 475 A1**

(12) **EUROPEAN PATENT APPLICATION**
published in accordance with Art. 153(4) EPC

(43) Date of publication:
**21.08.2024 Bulletin 2024/34**

(21) Application number: **21960686.0**

(22) Date of filing: **15.10.2021**

(51) International Patent Classification (IPC):
***B60T 13/74*** (2006.01)

(52) Cooperative Patent Classification (CPC):
**B60T 8/171; B60T 8/172; B60T 13/74; B60T 13/741; B60T 13/746; F16D 65/18; H02P 3/04**

(86) International application number:
**PCT/JP2021/038292**

(87) International publication number:
**WO 2023/062833 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hitachi Astemo, Ltd.**
**Ibaraki 312-8503 (JP)**

(72) Inventors:
• **KOBUNE, Tatsuro**
**Hitachinaka-shi, Ibaraki 312-8503 (JP)**
• **MATSUZAKI, Norikazu**
**Hitachinaka-shi, Ibaraki 312-8503 (JP)**
• **KIKAWA, Masayuki**
**Hitachinaka-shi, Ibaraki 312-8503 (JP)**

(74) Representative: **Hoffmann Eitle**
**Patent- und Rechtsanwälte PartmbB**
**Arabellastraße 30**
**81925 München (DE)**

(54) **ELECTRIC PARKING BRAKE DEVICE AND BRAKE CONTROL DEVICE**

(57) A parking brake control apparatus (24) stops driving of an electric motor (7A) when a current value of the electric motor (7A) reaches a target current threshold value, when driving the electric motor (7A) to press brake pads (6C) against a disk rotor (4) and hold a braking force. The target current threshold value is a current value for stopping the driving of the electric motor (7A). The parking brake control apparatus (24) changes the target current threshold value according to a rotational acceleration of the electric motor (7A).

Fig. 1

EP 4 417 475 A1

**Description**

TECHNICAL FIELD

The present disclosure relates to an electric parking brake apparatus and a brake control apparatus that provide a braking force to a vehicle such as an automobile.

BACKGROUND ART

Known examples of brake apparatuses mounted on vehicles such as automobiles include electric brake apparatuses that press a braking member (for example, a brake pad) against a braking target member (for example, a disk rotor) and hold a braking force by driving (rotating) an electric motor (an electrically-driven motor) when, for example, stopping or parking the vehicle (for example, PTL 1).

CITATION LIST

PATENT LITERATURE

PTL 1: Japanese Patent Application Public Disclosure No. 2019-130939

SUMMARY OF INVENTION

In the case of the conventional technique, when the braking force is held (applied), a variation may occur in a thrust force generated based on the driving of the electric motor.

An object of one aspect of the present invention is to provide an electric parking brake apparatus and a brake control apparatus capable of suppressing a variation in a thrust force generated based on driving of an electric motor when a braking force is held.

According to one aspect of the present invention, an electric parking brake apparatus includes an electric motor configured to drive an electric mechanism configured to press a braking member against a braking target member and hold a braking force, and a control apparatus configured to control driving of the electric motor. The control apparatus stops the driving of the electric motor when a current value of the electric motor reaches a target current threshold value for stopping the driving of the electric motor when holding the braking force, and changes the target current threshold value according to a rotational acceleration of the electric motor.

Further, according to one aspect of the present invention, an electric parking brake apparatus includes an electric motor configured to drive an electric mechanism configured to press a braking member against a braking target member and hold a braking force, and a control apparatus configured to control driving of the electric motor. The control apparatus includes a torque calculation portion configured to calculate a torque of the electric motor required to hold the braking force, a torque correction portion configured to correct the torque of the electric motor that is determined by the torque calculation portion based on a rotational acceleration of the electric motor, and a target current determination portion configured to calculate a target current threshold value for stopping the driving of the electric motor according to an output of the torque correction portion.

Further, according to one aspect of the present invention, a brake control apparatus is configured to stop driving of an electric motor when a current value of the electric motor reaches a target current threshold value for stopping the driving of the electric motor, when driving the electric motor to press a braking member against a braking target member and hold a braking force. The brake control apparatus changes the target current threshold value according to a rotational acceleration of the electric motor.

According to the one aspect of the present invention, the variation in the thrust force generated based on the driving of the electric motor can be suppressed when the braking force is held. As a result, the maximum thrust force can be reduced, and a size reduction and a cost reduction can be achieved.

BRIEF DESCRIPTION OF DRAWINGS

Fig. 1 is a conceptual diagram of a vehicle on which an electric parking brake apparatus and a brake control apparatus according to an embodiment are mounted.
Fig. 2 is a vertical cross-sectional view illustrating a disk brake equipped with an electric parking brake function that is mounted on a rear wheel side in Fig. 1 in an enlarged manner.

Fig. 3 is a block diagram illustrating the parking brake control apparatus in Fig. 1 together with the rear wheel-side disk brake and the like.

Fig. 4 is a flowchart illustrating application control processing performed by the parking brake control apparatus in Fig. 1.

DESCRIPTION OF EMBODIMENTS

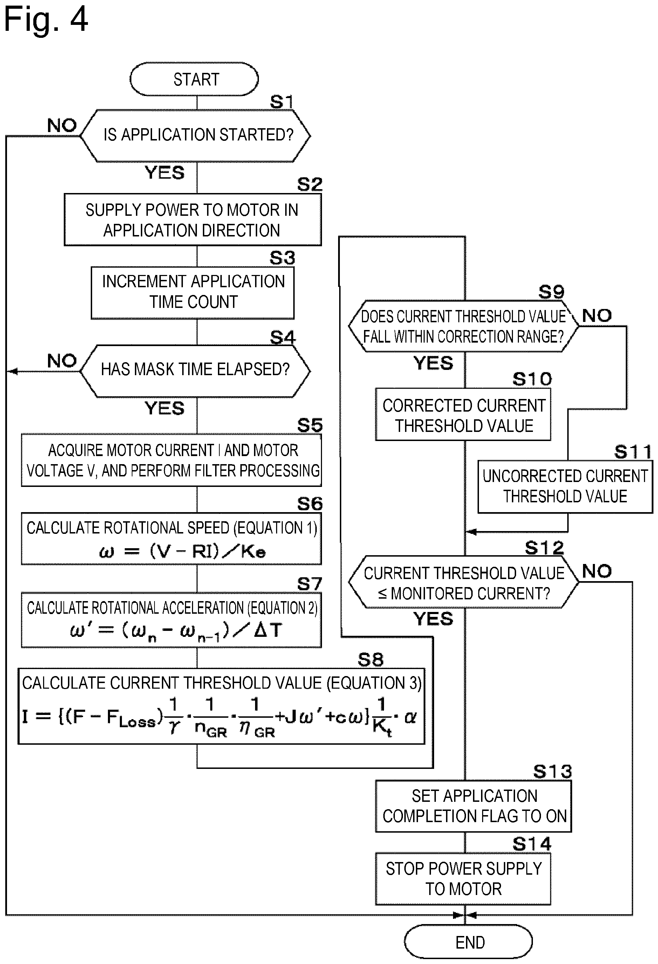

In the following description, an electric parking brake apparatus and a brake control apparatus according to an embodiment will be described citing an example in which they are mounted on a four-wheeled automobile with reference to the accompanying drawings. Each step in a flowchart illustrated in Fig. 4 will be represented by a symbol "S" (for example, each step will be indicated like step 1 = "S1").

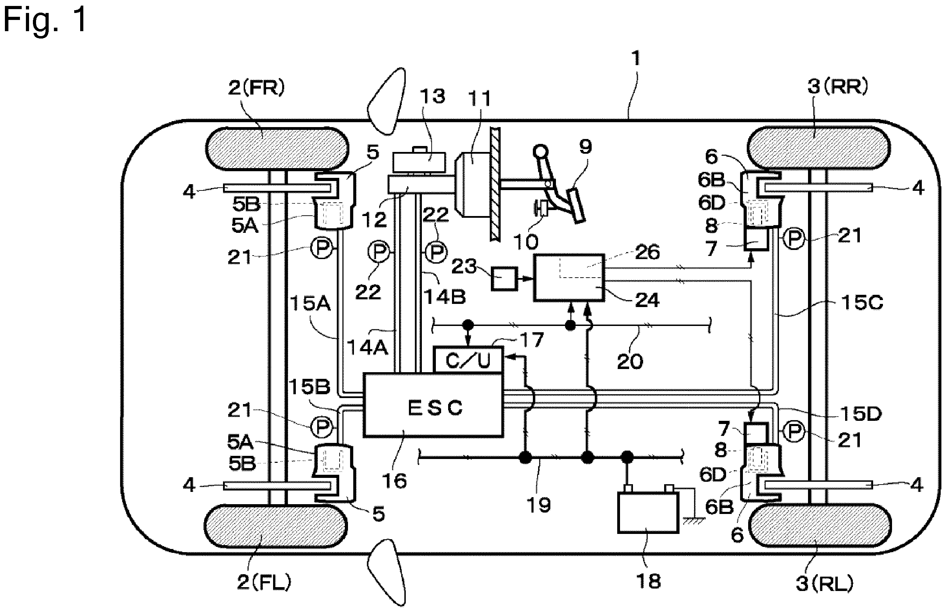

In Fig. 1, four wheels in total that include, for example, left and right front wheels 2 (FL and FR) and left and right rear wheels 3 (RL and RR) are mounted under a vehicle body 1 forming a main structure of a vehicle (on a road surface side). The wheels (each of the front wheels 2 and each of the rear wheels 3) constitute the vehicle together with the vehicle body 1. A brake system for providing a braking force is mounted on the vehicle. In the following description, the brake system of the vehicle will be described.

A disk rotor 4 is provided on each of the front wheels 2 and the rear wheels 3. The disk rotor 4 serves as a braking target member (a rotational member) that rotates together with each of the wheels (each of the front wheels 2 and each of the rear wheels 3). The disk rotor 4 for the front wheel 2 is subjected to a braking force by a front wheel-side disk brake 5, which is a hydraulic disk brake. The disk rotor 4 for the rear wheel 3 is subjected to a braking force by a rear wheel-side disk brake 6, which is a hydraulic disk brake equipped with an electric parking brake function.

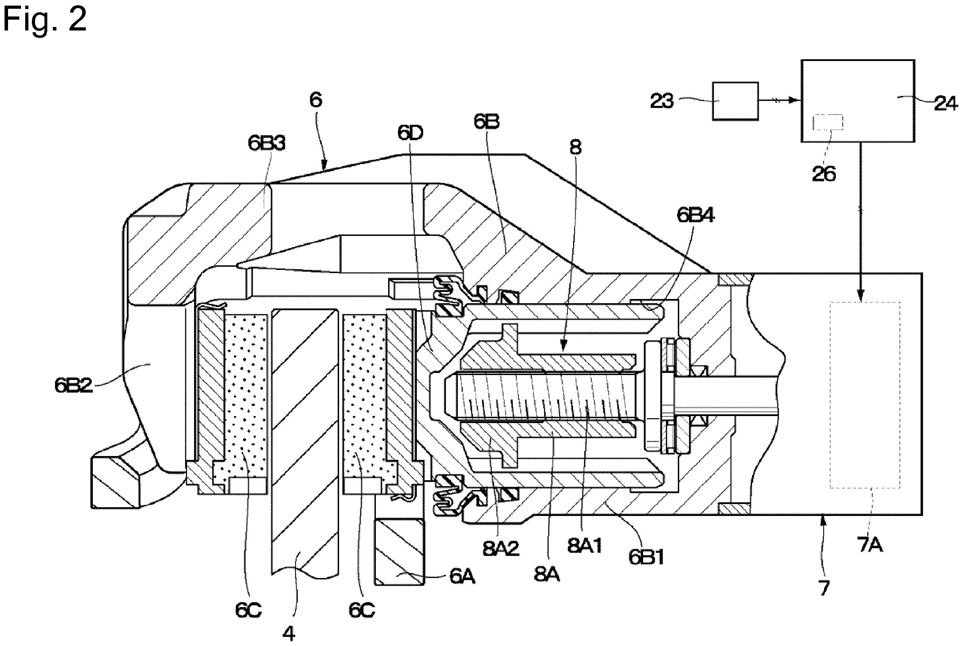

A pair (a set) of rear wheel-side disk brakes 6 provided in correspondence with the left and right rear wheels 3, respectively, is a hydraulic brake mechanism (a hydraulic brake) that provides a braking force by pressing brake pads 6C (refer to Fig. 2) against the disk rotor 4 by a hydraulic pressure. As illustrated in Fig. 2, each of the rear wheel-side disk brakes 6 includes, for example, a mount member 6A called a carrier, a caliper 6B as a wheel cylinder, the pair of brake pads 6C as a braking member (a friction member or a friction pad), and a piston 6D as a pressing member. In this case, the caliper 6B and the piston 6D constitute a cylinder mechanism, i.e., a cylinder mechanism in which the piston 6D is moved by the hydraulic pressure to press the brake pads 6C against the disk rotor 4.

The mount member 6A is fixed to a non-rotatable portion of the vehicle, and is disposed across over the outer peripheral side of the disk rotor 4. The caliper 6B is provided on the mount member 6A movably in the axial direction of the disk 4. The caliper 6B includes a cylinder main body portion 6B 1, a claw portion 6B2, and a bridge portion 6B3 connecting them. A cylinder (a cylinder hole) 6B4 is provided in the cylinder main body portion 6B1, and the piston 6D is fittedly inserted in the cylinder 6B4. The brake pads 6C are movably attached to the mount member 6A, and are disposed so as to be able to abut against the disk rotor 4. The piston 6D presses the brake pads 6C against the disk rotor 4.

Then, the caliper 6B thrusts the brake pads 6C by the piston 6D according to supply (addition) of the hydraulic pressure (a brake hydraulic pressure) into the cylinder 6B4 based on, for example, an operation of a brake pedal 9. At this time, the brake pads 6C are pressed against the both surfaces of the disk rotor 4 by the claw portion 6B2 of the caliper 6B and the piston 6D. As a result, a braking force is provided to the rear wheel 3 rotating together with the disk rotor 4.

Further, the rear wheel-side disk brake 6 includes an electric actuator 7 and a rotation-liner motion conversion mechanism 8. The electric actuator 7 includes an electric motor 7A as an electrically-driven motor, and a speed reducer (not illustrated) that slows down the rotation of this electric motor 7A. The electric motor 7A serves as a thrust source (a driving source) for thrusting the piston 6D. The rotation-linear motion conversion mechanism 8 constitutes a holding mechanism (a pressing member holding mechanism) that maintains the force pressing the brake pads 6C.

In this case, the rotation-linear motion conversion mechanism 8 includes a rotation-linear motion member 8A. The rotation-linear motion member 8A converts a rotation of the electric motor 7A into an axial displacement (a linear displacement) of the piston 6D and also thrusts this piston 6D. The rotation-linear motion member 8A includes, for example, a threaded member 8A1 and a linear motion member 8A2. The threaded member 8A1 is made of an externally threaded rod-like member. The linear motion member 8A2 serves as a thrust member including an internal thread hole formed on the inner peripheral side thereof. The rotation-linear motion conversion mechanism 8 converts the rotation of the electric motor 7A into the axial displacement of the piston 6D, and also holds the piston 6D thrust by the electric motor 7A. In other words, the rotation-linear motion conversion mechanism 8 provides a thrust force to the piston 6D by the electric motor 7A, thrusts the brake pads 6C by this piston 6D to press the disk rotor 4, and holds the thrust force on this piston 6D.

The rotation-linear motion conversion mechanism 8 constitutes an electric mechanism of the electric parking brake apparatus (the electric brake apparatus) together with the electric motor 7A. The electric mechanism converts the rotational force of the electric motor 7A into the thrust force via the speed reducer and the rotation-linear motion conversion mechanism 8 to thrust (displace) the piston 6D, thereby pressing the brake pads 6C against the disk rotor 4 and holding the braking force of the vehicle. The electric motor 7A drives the electric mechanism. Such an electric mechanism (i.e.,

the electric motor 7A and the rotation-linear motion conversion mechanism 8) constitutes the electric parking brake apparatus together with a parking brake control apparatus 24, which will be described below.

The rear wheel-side disk brake 6 thrusts the piston 6D by the brake hydraulic pressure generated based on, for example, the operation of the brake pedal 9 to press the disk rotor 4 with the brake pads 6C, thereby providing the braking force to the wheel (the rear wheel 3) and thus the vehicle. In addition thereto, the rear wheel-side disk brake 6 thrusts the piston 6D by the electric motor 7A via the rotation-linear motion conversion mechanism 8 according to an actuation request based on, for example, a signal from a parking brake switch 23, thereby providing a braking force (a parking brake or an auxiliary brake while the vehicle is running as necessary) to the vehicle, as will be described below.

In other words, the rear wheel-side disk brake 6 drives the electric motor 7A to thrust the piston 6D by the rotation-linear motion member 8A, thereby pressing the brake pads 6C against the disk rotor 4 and holding them. In this case, the rear wheel-side disk brake 6 thrusts the piston 6D by the electric motor 7A and holds the braking of the vehicle according to a parking brake request signal (an application request signal), which serves as an application request for providing the parking brake (the brake used to park the vehicle). Along therewith, the rear wheel-side disk brake 6 brakes the vehicle by the supply of the hydraulic pressure from a hydraulic pressure source (a master cylinder 12, which will be described below, or a hydraulic pressure supply apparatus 16 as necessary) according to the operation of the brake pedal 9.

In this manner, the rear wheel-side disk brake 6 includes the rotation-linear motion conversion mechanism 8, which presses the brake pads 6C against the disk rotor 4 by the electric motor 7A and holds the force pressing these brake pads 6C, and is also configured to be able to press the brake pads 6C against the disk rotor 4 by the hydraulic pressure added separately from the pressing by the electric motor 7A.

On the other hand, a pair (a set) of front wheel-side disk brakes 5 provided in correspondence with the left and right front wheels 2, respectively, is configured in an approximately similar manner to the rear wheel-side disk brakes 6, except for the mechanism relating to the operation of the parking brake. More specifically, as illustrated in Fig. 1, each of the front wheel-side disk brakes 5 includes a mount member (not illustrated), a caliper 5A, brake pads (not illustrated), a piston 5B, and the like, but does not include the electric actuator 7 (the electric motor 7A), the rotation-linear motion conversion mechanism 8, and the like for actuating and releasing the parking brake. However, the front wheel-side disk brake 5 is similar to the rear wheel-side disk brake 6 in terms of thrusting the piston 5B by the hydraulic pressure generated based on, for example, the operation of the brake pedal 9 to provide the braking force to the wheel (the front wheel 2) and thus the vehicle. In other words, the front wheel-side disk brake 5 is a hydraulic brake mechanism (a hydraulic brake) that provides the braking force by pressing the brake pads against the disk rotor 4 by the hydraulic pressure.

The front wheel-side disk brake 5 may be configured as a disk brake equipped with the electric parking brake function similarly to the rear wheel-side disk brake 6. Further, in the embodiment, the hydraulic disk brake 6 including the electric motor 7A is used as the electric brake mechanism (the electric parking brake). However, the electric brake mechanism is not limited thereto, and examples of another brake apparatus usable as the electric brake mechanism include an electric disk brake including an electric caliper, an electric drum brake that provides a braking force by pressing shoes against a drum using an electric actuator, a disk brake equipped with an electric drum-type parking brake, and a cable puller-type electric parking brake that actuates application of a parking brake by pulling a cable using an electric motor. In other words, various types of electric brake mechanisms can be used as the electric brake mechanism, as long as the used mechanism is configured to be able to press (thrust) a frictional member (a pad or a shoe) against a rotational member (a rotor or a drum) based on driving of an electric motor (an electric actuator), and maintain and release this pressing force.

The brake pedal 9 is provided on a dashboard side of the vehicle body 1. The brake pedal 9 is operated by being pressed by a driver (an operator) at the time of the operation of braking the vehicle. Each of the disk brakes 5 and 6 provides and releases the braking force as a regular brake (a service brake) based on the operation of the brake pedal 9. A brake operation detection sensor (a brake sensor) 10, such as a brake lamp switch, a pedal switch (a brake switch), and a pedal stroke sensor, is provided to the brake pedal 9.

The brake operation detection sensor 10 detects whether the operation of pressing the brake pedal 9 is performed or an operation amount thereof, and outputs a detection signal thereof to the ESC control apparatus 17. The detection signal of the brake operation detection sensor 10 is transmitted via, for example a vehicle data bus 20 or a communication line (not illustrated) connecting the ESC control apparatus 17 and the parking brake control apparatus 24 to each other (output to the parking brake control apparatus 24).

The operation of pressing the brake pedal 9 is transmitted to the master cylinder 12, which functions as an oil pressure source (a hydraulic pressure source), via a booster 11. The booster 11 is configured as a negative-pressure booster (an atmospheric-pressure booster) or an electric booster (an electrically-driven booster) provided between the brake pedal 9 and the master cylinder 12. The booster 11 powers up the pressing force and transmits it to the master cylinder 12 at the time of the operation of pressing the brake pedal 9. At this time, the master cylinder 12 generates a hydraulic pressure by brake fluid supplied (replenished) from a master reservoir 13. The master reservoir 13 is a hydraulic fluid tank that contains the brake fluid therein. The mechanism for generating the hydraulic pressure by the brake pedal 9 is not limited to the above-described configuration, and may be a mechanism that generates the hydraulic pressure according to the operation of the brake pedal 9, such as a brake-by-wire type mechanism.

The hydraulic pressure generated in the master cylinder 12 is transmitted to the hydraulic pressure supply apparatus 16 (hereinafter referred to as the ESC 16) via, for example, a pair of cylinder-side hydraulic pressure pipes 14A and 14B. The hydraulic pressure transmitted to the ESC 16 is supplied to the individual disk brakes 5 and 6 via brake-side pipe portions 15A, 15B, 15C, and 15D. The ESC 16 is disposed between each of the disk brakes 5 and 6 and the master cylinder 12. Now, the ESC 16 is a hydraulic pressure control apparatus that controls the hydraulic pressure of the hydraulic brake (the front wheel-side disk brakes 5 and the rear wheel-side disk brakes 6). To fulfill this purpose, the ESC 16 includes a plurality of control valves, a hydraulic pressure pump that pressurizes the brake hydraulic pressure, an electric motor that drives this hydraulic pressure pump, and a hydraulic pressure control reservoir that temporarily stores extra brake fluid (none of them illustrated). Each of the control valves and the electric motor in the ESC 16 are connected to the ESC control apparatus 17, and the ESC 16 includes the ESC control apparatus 17.

The opening/closing of each of the control valves and the driving of the electric motor in the ESC 16 are controlled by the ESC control apparatus 17. In other words, the ESC control apparatus 17 is an ESC control unit that controls the ESC 16 (an ECU for the ESC). The ESC control apparatus 17 includes a microcomputer, and electrically controls the driving of the ESC 16 (a solenoid of each of the control valves and the electric motor therein). In this case, for example, an arithmetic circuit and a driving circuit (none of them illustrated) are built in the ESC control apparatus 17. The arithmetic circuit controls the supply of the hydraulic pressure from the ESC 16 and detects a malfunction of the ESC 16. The driving circuit drives the electric motor and each of the control valves.

The ESC control apparatus 17 individually controls the driving of each of the control valves (the solenoid thereof) and the electric motor for the hydraulic pressure pump in the ESC 16. Due to this control, the ESC control apparatus 17 performs control of reducing, maintaining, and increasing or pressurizing the brake hydraulic pressure (a wheel cylinder hydraulic pressure) to supply to the individual disk brakes 5 and 6 via the brake-side pipe portions 15A to 15D for each of the disk brakes 5 and 6 individually. In this case, the ESC control apparatus 17 performs, for example, braking force distribution control, anti-lock brake control (hydraulic ABS control), vehicle stabilization control, hill start aid control, traction control, vehicle following control, traffic lane departure avoidance control, and obstacle avoidance control (automatic brake control or brake control for reducing collision damage) by controlling the actuation of the ESC 16.

The ESC 16 directly supplies the hydraulic pressure generated in the master cylinder 12 to the disk brakes 5 and 6 (the calipers 5A and 6B thereof) at the time of a normal operation in response to the driver's brake operation. On the other hand, for example, the ESC 16 maintains the hydraulic pressure in the disk brake 5 or 6 by closing a control valve for a pressure increase when performing the anti-lock brake control or the like, and discharges the hydraulic pressure in the disk brake 5 or 6 so as to release it to the reservoir for controlling the hydraulic pressure by opening a control valve for a pressure reduction when reducing the hydraulic pressure in the disk brake 5 or 6. Further, when increasing or pressurizing the hydraulic pressure to supply to the disk brake 5 or 6 to perform, for example, the stabilization control (electronic stability control) when the vehicle is running, the ESC 16 actuates the hydraulic pressure pump by the electric motor with a control valve for supply closed, thereby supplying the brake fluid discharged from this hydraulic pressure pump to the disk brake 5 or 6. At this time, the brake fluid in the master reservoir 13 is supplied from the master cylinder 12 side toward an intake side of the hydraulic pressure pump.

Power from a battery 18 (or a generator driven by an engine), which serves as a vehicle power source, is supplied to the ESC control apparatus 17 via a power source line 19. As illustrated in Fig. 1, the ESC control apparatus 17 is connected to the vehicle data bus 20. Instead of the ESC 16, a known ABS unit can also be used. Alternatively, the master cylinder 12 and the brake-side pipe portions 15A to 15D can also be directly connected to each other without the provision of the ESC 16 therefrom (i.e., with the ESC 16 omitted).

The vehicle data bus 20 constitutes a CAN (Controller Area Network) as a serial communication portion mounted on the vehicle body 1. A large number of electronic devices mounted on the vehicle (for example, various kinds of ECUs including the ESC control apparatus 17 and the parking brake control apparatus 24) carry out in-vehicle multiplex communication with one another via the vehicle data bus 20. In this case, examples of vehicle information transmitted to the vehicle data bus 20 include information (vehicle information) based on detection signals (output signals) from the brake operation detection sensor 10, an ignition switch, a safety belt sensor, a door lock sensor, a door opening sensor, a seat occupancy sensor, a vehicle speed sensor, a steering angle sensor, an accelerator sensor (an accelerator operation sensor), a throttle sensor, an engine rotation sensor, a stereo camera, a millimeter-wave radar, a slope sensor (an inclination sensor), a gearshift sensor (transmission data), an acceleration sensor (a G sensor), a wheel speed sensor, a pitch sensor that detects a motion of the vehicle in a pitch direction, and the like. Further, the examples of the vehicle information transmitted to the vehicle data bus 20 also include a detection signal from a W/C pressure sensor 21, which detects the wheel cylinder pressure (the W/C pressure), and a detection signal from an M/C pressure sensor 22, which detects a master cylinder pressure (an M/C pressure).

Next, a parking brake switch 23 and the parking brake control apparatus 24 will be described.

The parking brake switch (PKB-SW) 23 as the switch of the electric parking brake is provided in the vehicle body 1 at a position located close to the driver's seat (not illustrated). The parking brake switch 23 is an operation instruction portion operated by the driver. The parking brake switch 23 transmits a signal (an actuation request signal) corresponding to a request to actuate the parking brake (an application request working as a holding request or a release request working as a stop request) according to an operation instruction from the driver to the parking brake control apparatus 24. In other words, the parking brake switch 23 outputs an actuation request signal (an application request signal working as a holding request signal or a release request signal working as a stop request signal) for actuating the piston 6D and thus the brake pads 6C for the application (holding actuation) or for the release (release actuation) based on the driving (the rotation) of the electric motor 7A to the parking brake control apparatus 24. The parking brake control apparatus 24 is a control unit for the parking brake (an ECU for the parking brake).

When the parking brake switch 23 is operated by the driver toward a braking side (an application side), i.e., when the application request for providing the braking force to the vehicle (the braking holding request) is issued, the application request signal (a parking brake request signal or an application instruction) is output from the parking brake switch 23. In this case, the electric motor 7A of the rear wheel-side disk brake 6 receives supply of power for rotating this electric motor 7A toward the braking side via the parking brake control apparatus 24. At this time, the rotation-linear motion conversion mechanism 8 thrusts (presses) the piston 6D toward the disk rotor 4 side based on the rotation of the electric motor 7A, and holds the thrust piston 6D. As a result, the rear wheel-side disk brake 6 is brought into a state that the braking force as the parking brake (or the auxiliary brake) is provided, i.e., an application state (a braking holding state).

On the other hand, when the parking brake switch 23 is operated by the driver toward a braking release side (a release side), i.e., when the release request for releasing the braking force on the vehicle (the braking release request) is issued, the release request signal (a parking brake release request signal or a release instruction) is output from the parking brake switch 23. In this case, the electric motor 7A of the rear wheel-side disk brake 6 receives supply of power for rotating this electric motor 7A in the opposite direction from the braking side via the parking brake control apparatus 24. At this time, the rotation linear-motion conversion mechanism 8 releases the holding of the piston 6D (releases the pressing force generated by the piston 6D) by the rotation of the electric motor 7A. As a result, the rear wheel-side disk brake 6 is brought into a state that the application of the braking force as the parking brake (or the auxiliary brake) is released, i.e., a release state (a braking release state).

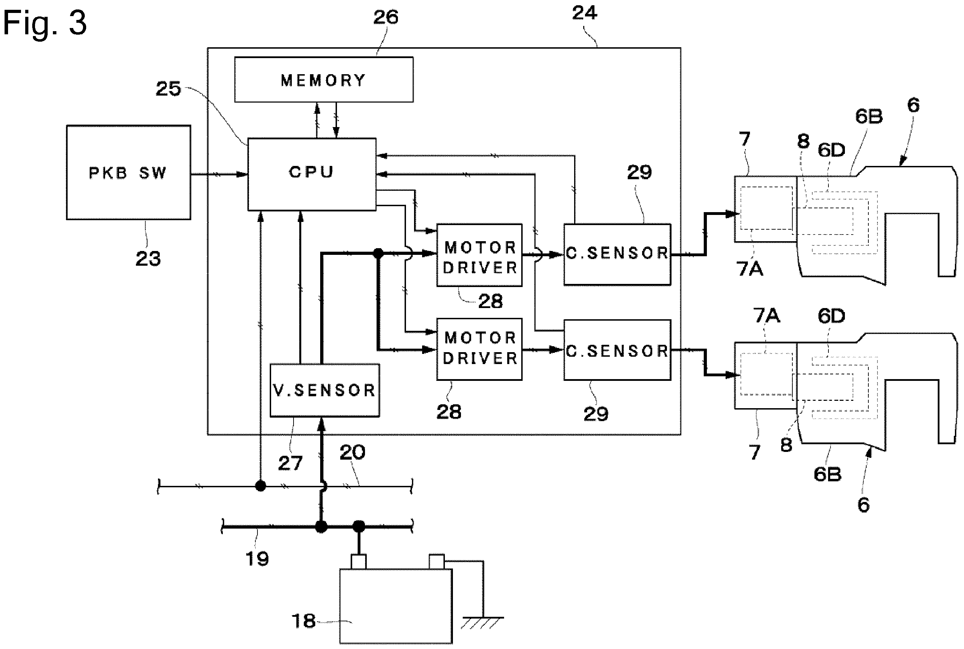

The parking brake control apparatus 24 as the control apparatus (the brake control apparatus) constitutes the electric parking brake apparatus together with the rear wheel-side disk brake 6 (the electric motor 7A and the rotation-linear motion conversion mechanism 8 thereof). The parking brake control apparatus 24 controls the driving of the electric motor 7A. To fulfill this purpose, as illustrated in Fig. 3, the parking brake control apparatus 24 includes an arithmetic circuit (CPU) 25 including a microcomputer or the like and a memory 26. Power from the battery 18 (or the generator driven by the engine) is supplied to the parking brake control apparatus 24 via the power source line 19.

The parking brake control apparatus 24 controls the driving of the electric motors 7A and 7A of the rear wheel-side disk brakes 6 and 6, thereby generating the braking force (the parking brake or the auxiliary brake) when the vehicle is parked or stopped (or is running as necessary). In other words, the parking brake control apparatus 24 actuates (applies or releases) the disk brakes 6 and 6 as the parking brakes (the auxiliary brakes as necessary) by driving the left and right electric motors 7A and 7A. To fulfill this purpose, the input side of the parking brake control apparatus 24 is connected to the parking brake switch 23, and the output side thereof is connected to the respective electric motors 7A and 7A of the disk brakes 6 and 6. Then, the arithmetic circuit 25 and motor driving circuits 28 and 28 are built in the parking brake control apparatus 24. The arithmetic circuit 25 is provided to, for example, detect the driver's operation (an operation of the parking brake switch 23), determine whether the electric motors 7A and 7A should be driven, and determine whether to stop the electric motors 7A and 7A. The motor driving circuits 28 and 28 are provided to control the electric motors 7A and 7A.

The parking brake control apparatus 24 drives the left and right electric motors 7A and 7A to apply (hold) or release (stop) the left and right disk brakes 6 and 6 based on the actuation request (the application request or the release request) according to the driver's operation of the parking brake switch 23 by the driver, an actuation request according to a determination of an automatic application/automatic release, or the like. At this time, in the rear wheel-side disk brake 6, the piston 6D and the brake pads 6C are held or released by the rotation-linear motion conversion mechanism 8 based on the driving of each of the electric motors 7A. In this manner, the parking brake control apparatus 24 controls the driving of the electric motor 7A so as to thrust the piston 6D (and thus the brake pads 6C) according to the actuation request signal for the holding actuation (the application) or the release actuation (the release) of the piston 6D (and thus the brake pads 6C).

As illustrated in Fig. 3, the parking brake switch 23, the vehicle data bus 20, a voltage sensor portion 27, the motor driving circuits 28, current sensor portions 29, and the like, in addition to the memory 26 as a storage portion, are connected to the arithmetic circuit 25 of the parking brake control apparatus 24. Various kinds of state amounts of the vehicle that are required to control (actuate) the parking brake, i.e., various kinds of vehicle information can be acquired from the vehicle data bus 20. Further, the parking brake control apparatus 24 can output information and instructions to various kinds of ECUs including the ESC control apparatus 17 via the vehicle data bus 20 or the above-described communication line.

The parking brake control apparatus 24 may be configured in such a manner that the vehicle information acquired from the vehicle data bus 20 is acquired by connecting a sensor that detects this information directly to the parking brake control apparatus 24 (the arithmetic circuit 25 thereof). Alternatively, the arithmetic circuit 25 of the parking brake control apparatus 24 may be configured in such a manner that the actuation request based on the determination of the automatic application/automatic release is input from another control apparatus connected to the vehicle data bus 20 (for example, the ESC control apparatus 17). In this case, the vehicle can be configured in such a manner that the other control apparatus such as the ESC control apparatus 17 controls the determination of the automatic application/automatic release, instead of the parking brake control apparatus 24. In other words, the control content of the parking brake control apparatus 24 can be integrated into the ESC control apparatus 17.

The parking brake control apparatus 24 includes the memory 26 as the storage portion embodied by, for example, a flash memory, a ROM, a RAM, or an EEPROM. The memory 26 stores therein a processing program used to control the parking brake. The memory 26 stores therein, for example, a processing program for performing a processing flow illustrated in Fig. 4, which will be described below, i.e., a processing program used for control processing at the time of the application of the electric parking brake. The parking brake control apparatus 24 and the ESC control apparatus 17 are configured as individual separate apparatuses from each other in the embodiment, but may be configured integrally (i.e., may be integrally constituted by a single braking control apparatus). Further, the parking brake control apparatus 24 is configured to control the two rear wheel-side disk brakes 6 and 6 on the left side and the right side, but may be provided for each of the rear wheel-side disk brakes 6 and 6 on the left side and the right side. In this case, each parking brake control apparatus 24 can also be provided integrally with the rear wheel-side disk brake 6.

As illustrated in Fig. 3, the voltage sensor portion 27, the left and right motor driving circuits 28 and 28, the left and right current sensor portions 29 and 29, and the like are built in the parking brake control apparatus 24. The voltage sensor portion 27 detects a voltage fed from the power source line 19. The left and right motor driving circuits 28 and 28 drive the left and right electric motors 7A and 7A, respectively. The left and right current sensor portions 29 and 29 detect respective motor currents of the left and right electric motors 7A and 7A. These voltage sensor portion 27, motor driving circuits 28, and current sensor portions 29 are each connected to the arithmetic circuit 25. Due to that, the arithmetic circuit 25 of the parking brake control apparatus 24 can, for example, determine whether to stop the driving of the electric motor 7A (determine whether the application is completed or determine whether the release is completed) based on a current value (a monitored current value) of the electric motor 7A that is detected by the current sensor portion 29 when applying or releasing the parking brake. The voltage sensor portion 27 is assumed to be configured to detect (measure) the voltage of the power source in the illustrated example, but, for example, the voltage sensor portion (a voltage sensor) can be configured to measure the voltages between terminals of the left and right electric motors 7A and 7A individually independently for each of the left and right sides.

Then, according to the conventional technique, a variation may occur in the thrust force generated based on the driving of the electric motor at the time of the application of holding the braking force. With the aim of solving it, if the driving of the electric motor can be accurately stopped with a desired thrust force at the time of the application, the maximum thrust force based on the driving of the electric motor can be reduced, and the brake mechanism can be reduced in size and cost. Then, an increase in the voltage leads to an increase in the thrust force. Therefore, the variation in the thrust force may increase according to a difference in the voltage when the electric motor is driven. On the other hand, one of causes for the change due to the voltage lies in the rotational acceleration of the electric motor when the application is completed. In light thereof, the embodiment is directed to achieving the generation of a proper thrust force by correcting a targeted current threshold value for stopping the driving of the electric motor (a target current threshold value) according to the rotational acceleration (the rotational deceleration) of the electric motor.

More specifically, in the embodiment, the parking brake control apparatus 24 stops the driving of the electric motor 7A when the current value (the monitored current value) of the electric motor 7A reaches the target current threshold value when driving the electric motor 7A to press the brake pads 6C against the disk rotor 4 and hold the braking force. The target current threshold value is a current value for stopping the driving of the electric motor 7A. The parking brake control apparatus 24 changes the target current threshold value according to the rotational acceleration of the electric motor 7A. More specifically, the parking brake control apparatus 24 changes the target current threshold value according to the rotational speed and the rotational acceleration of the electric motor 7A. In other words, the parking brake control apparatus 24 determines the rotational speed and the rotational acceleration of the electric motor 7A during the application. The rotational speed, the rotational acceleration, and the target current threshold value, which will be described below, are calculated every control cycle (calculation cycle) of the parking brake control apparatus 24, thereby being constantly calculated as values at the present moment. In other words, the values at the present moment are determined by updating values calculated in the control cycle.

The parking brake control apparatus 24 determines the rotational speed and the rotational acceleration of the electric motor 7A based on the voltage of the electric motor 7A. More specifically, the parking brake control apparatus 24 determines a rotational speed ω using the following equation 1 from the voltage between the terminals (a motor voltage V) and the current (a motor current I) of the electric motor 7A. In the equation 1, "V" represents the motor voltage (as of the completion), "I" represents the motor current (as of the completion), "R" represents motor resistance (including the resistance of a harness between the parking brake control apparatus 24, which is the ECU, and the electric motor 7A), and "Ke" represents a back electromotive force constant (a proportionality coefficient between the voltage and the number of rotations).

[Equation 1]

$$\omega = (V - RI) / Ke$$

The parking brake control apparatus 24 determines a rotational acceleration ω' using the following equation 2 using the rotational speed ω determined based on the motor voltage V. In the equation 2, "$\omega_n$" represents a rotational speed calculated in the present control cycle (a present value), "$\omega_{n-1}$" represents a rotational speed calculated in the previous control cycle (a previous value), and ΔT represents the control cycle (the calculation cycle) of the parking brake control apparatus 24.

[Equation 2]

$$\omega' = (\omega_n - \omega_{n-1}) / \Delta T$$

The parking brake control apparatus 24 calculates the target current threshold value I by the following equation 3 using the determined rotational speed ω and rotational acceleration ω'. In the equation 3, "F" represents a target thrust force, "$F_{LOSS}$" represents a thrust force loss, "γ" represents mechanical efficiency when the rotational motion is converted into the linear motion (efficiency), "$n_{GR}$" represents a speed reduction ratio, "$\eta_{GR}$" represents speed reducer efficiency, "J" represents inertia of the rotational system, "c" represents a viscosity coefficient of grease, "Kt" represents a back electromotive force constant (a proportionality coefficient between the current and the torque), and "α" represents a current monitoring error. These target thrust force F, thrust force loss $F_{LOSS}$, mechanical efficiency γ, speed reduction ratio $n_{GR}$, speed reducer efficiency $\eta_{GR}$, inertia J of the rotational system, viscosity coefficient c, back electromotive force constant Kt, and current monitoring error α will be described below.

[Equation 3]

$$I = \left\{ (F - F_{Loss}) \frac{1}{\gamma} \cdot \frac{1}{n_{GR}} \cdot \frac{1}{\eta_{GR}} + J\,\omega' + c\,\omega \right\} \frac{1}{K_t} \cdot \alpha$$

Then, "(F - $F_{LOSS}$)" in the parentheses in the equation 3 corresponds to a required thrust force. Further, " { ..... }" in the curly brackets in the equation 3 corresponds to a required torque. In the equation 3, "Jω'" represents a correction term based on the rotational acceleration ω'. Then, "cω" represents a correction term based on the rotational speed ω. The target current threshold value I calculated using the equation 3 is a current threshold value calculated based on the rotational speed ω and the rotational acceleration ω', i.e., a current threshold value changed (corrected) according to the rotational speed ω and the rotational acceleration ω'.

The parking brake control apparatus 24 determines whether the target current threshold value I calculated using the equation 3 is a value within a preset correction range. The correction range is a determination range for determining whether to "stop the driving of the electric motor 7A with the target current threshold value I calculated using the equation 3" or "stop the driving of the electric motor 7A with a preset predetermined value It". If determining that the target current threshold value I calculated using the equation 3 is a value within the preset correction range, the parking brake control apparatus 24 stops the driving of the electric motor 7A when the current value (the monitored current value) of the electric motor 7A reaches the target current threshold value I. On the other hand, if determining that the target current threshold value I calculated using the equation 3 is not a value within the preset correction range, the parking brake control apparatus 24 stops the driving of the electric motor 7A when the current value (the monitored current value) of the electric motor 7A reaches the preset predetermined value It.

The predetermined value It can be preset as a value that does not lead to an excessive or insufficient thrust force as the target current value for stopping the driving of the electric motor 7A. Further, the correction range can be preset so as to prevent an excessive or insufficient thrust force from being generated when the target current threshold value I is calculated as an excessive or insufficient value. For example, suppose that the predetermined value It is 11.0 [A], and the correction range is 9.0 [A] to 11.0 [A]. In this case, for example, if the calculated target current threshold value I is 10.5 [A], the target current threshold value I is a value within the correction range, and therefore the driving of the electric motor 7A is stopped when the current value of the electric motor 7A reaches 10.5 [A]. On the other hand, for example, if the calculated target current threshold value I is 13.0 [A], the target current threshold value I is not a value within the correction range, and therefore the driving of the electric motor 7A is stopped when the current value of the electric motor 7A reaches 11.0 [A] (= the predetermined value It) to prevent an excessive thrust force from being generated. On the other hand, for example, if the calculated target current threshold value I is 5.0 [A], the target current threshold value I is not a value within the correction range, and therefore the driving of the electric motor 7A is stopped when the current value of the electric motor 7A reaches 11.0 [A] (= the predetermined value It) to prevent an insufficient thrust force from being generated.

More specifically, the parking brake control apparatus 24 includes a torque calculation portion, a torque correction portion, a target current determination portion, and a motor driving stop portion. The torque calculation portion calculates the torque of the electric motor 7A required to hold the braking force. The torque calculation portion corresponds to a portion other than the correction term in the equation for calculating the required torque (the equation in the curly brackets " {.....}") in the above-described equation 3, i.e., processing for calculating a target torque T1 before the correction. More specifically, the torque calculation portion corresponds to processing for calculating the following equation 4 (the processing for calculating the target torque T1 before the correction).

[Equation 4]

$$T1 = (F - F_{loss}) \frac{1}{\gamma} \cdot \frac{1}{n_{GR}} \cdot \frac{1}{\eta_{GR}}$$

The torque correction portion corrects the torque of the electric motor 7A determined by the torque calculation portion based on the rotational acceleration of the electric motor 7A. More specifically, the torque correction portion corrects the torque of the electric motor 7A determined by the torque calculation portion based on the rotational speed and the rotational acceleration of the electric motor 7A. The torque correction calculation portion corresponds to a portion of the correction terms in the equation for calculating the required torque (the equation in the curly brackets "{.....}") in the above-described equation 3, i.e., processing for calculating a correction torque T2. More specifically, the torque correction calculation portion corresponds to processing for calculating the following equation 5 (the processing for calculating the correction torque T2).

[Equation 5]

$$T2 = J\omega' + c\omega$$

The target current determination portion calculates the target current threshold value for stopping the driving of the electric motor 7A according to an output of the torque correction portion. The target current determination portion corresponds to processing for calculating the target current threshold value I based on a sum of the above-described equation 4 (T1) corresponding to the required torque and the above-described equation 5 (T2) (T1 + T2). More specifically, the target current determination portion corresponds to processing for calculating the following equation 6 (the processing for calculating the target current threshold value 1).

[Equation 6]

$$I = (T1 + T2) \cdot \frac{1}{K_t} \cdot \alpha$$

The motor driving stop portion stops the driving of the electric motor 7A when the current value (the monitored current value) of the electric motor 7A reaches the target current threshold value I calculated by the target current determination portion. In this case, the motor driving stop portion determines whether the target current threshold value I is a value within the preset correction range, and can change the current value for stopping the driving of the electric motor 7A according to a result of this determination. More specifically, if the target current threshold value I is a value within the correction range (for example, 9.0 [A] or greater and 11.0 [A] or smaller), the motor driving stop portion stops the driving of the electric motor 7A when the current value of the electric motor 7A reaches the target current threshold value I. If the target current threshold value I is not a value within the correction range (for example, a value smaller than 9.0 [A] or a value greater than 11.0 [A]), the motor driving stop portion stops the driving of the electric motor 7A when the current value of the electric motor 7A reaches the preset predetermined value It (for example, 11.0 [A]) instead of the target current threshold value I. Such control of the application driving of the electric motor 7A by the parking brake control apparatus 24, i.e., control processing illustrated in Fig. 4 will be described in detail below.

The brake system of the four-wheeled automobile according to the embodiment is configured in the above-described manner, and the operation thereof will be described next.

When the driver of the vehicle operates the brake pedal 9 by pressing it, this pressing force is transmitted to the master cylinder 12 via the booster 11, and the brake hydraulic pressure is generated by the master cylinder 12. The brake hydraulic pressure generated in the master cylinder 12 is supplied to the individual disk brakes 5 and 6 via the cylinder-side hydraulic pressure pipes 14A and 14B, the ESC 16, and the brake-side pipe portions 15A, 15B, 15C, and 15D, and the braking force is provided to each of the left and right front wheels 2 and the left and right rear wheels 3.

In this case, in each of the disk brakes 5 and 6, the piston 5B or 6D is slidably displaced toward the brake pads 6C according to an increase in the brake hydraulic pressure in the caliper 5A or 6B, and the brake pads 6C are pressed against the disk rotor 4 or 4. As a result, the braking force based on the brake hydraulic pressure is provided. On the other hand, when the brake operation is released, the supply of the brake hydraulic pressure into the caliper 5A or 6B is stopped, which causes the piston 5B or 6D to be displaced so as to separate (retract) from the disk rotor 4 or 4. As a result, the brake pads 6C separate from the disk rotor 4 or 4, and the vehicle is returned into a non-braked state.

Next, when the driver of the vehicle operates the parking brake switch 23 toward the braking side (the application side), power is supplied from the parking brake control apparatus 24 to the electric motor 7A of the rear wheel-side disk brake 6 on each of the left side and the right side, and the electric motor 7A is rotationally driven. In the rear wheel-side disk brake 6, the rotational motion of the electric motor 7A is converted into the linear motion by the rotation-linear motion conversion mechanism 8, and the piston 6D is thrust by the rotation-linear motion member 8A. As a result, the disk rotor 4 is pressed by the brake pads 6C. At this time, the rotation-linear motion conversion mechanism 8 (the liner motion member 8A2) is kept in the braking state by, for example, a frictional force (a holding force) due to the threaded engagement. As a result, the rear wheel-side disk brake 6 is actuated (applied) as the parking brake. In other words, even after the supply of power to the electric motor 7A is stopped, the piston 6D is held at the braking position by the rotation-linear motion conversion mechanism 8.

On the other hand, when the driver operates the parking brake switch 23 toward the braking release side (the release side), power is supplied from the parking brake control apparatus 24 to the electric motor 7A so as to rotate the motor in the reverse direction. This supply of power causes the electric motor 7A to be rotated in the opposite direction from the direction at the time of the actuation (the application) of the parking brake. At this time, the braking force maintained by the rotation-linear motion conversion mechanism 8 is released, which allows the piston 6D to be displaced in a direction away from the disk rotor 4. As a result, the actuation of the rear wheel-side disk brake 6 as the parking brake is cleared (released).

Next, the control processing performed by the arithmetic circuit 25 of the parking brake control apparatus 24 will be described with reference to Fig. 4. The control processing illustrated in Fig. 4 is repeatedly performed every predetermined control cycle (for example, 10 ms) while power is kept supplied to the parking brake control apparatus 24.

When the parking brake control apparatus 24, which is the ECU (the Electronic Control Unit), is started up, the control processing illustrated in Fig. 4 is started. In S1, the parking brake control apparatus 24 determines whether the application is started. More specifically, the application is started when an application instruction is output by operating the parking brake switch 23 to the application side or an application instruction is output based on an application determination logic of the parking brake. In S 1, the parking brake control apparatus 24 determines whether the application is started based on the application instruction. In this manner, in S 1, the parking brake control apparatus 24 confirms whether the instruction is an application instruction to perform the correction control during the application control.

If "NO" is determined in S1, i.e., the application is determined not to be started, the processing proceeds to RETURN. In other words, the processing returns to "START" via "END", followed by a repetition of the processing in step S1 and steps subsequent thereto. On the other hand, if "YES" is determined in S1, i.e., the application is determined to be started, the processing proceeds to S2. In S2, the parking brake control apparatus 24 supplies (applies) power to the electric motor 7A, thereby driving the electric motor 7A in the application direction. In this manner, in S2, the parking brake control apparatus 24 supplies power to the electric motor 7A in the application direction when the application instruction is ongoing.

In S3 subsequent to S2, the parking brake control apparatus 24 increments a time count to measure the time since the start of the application. In other words, in S3, the parking brake control apparatus 24 increments the time count if the application actuation is ongoing. After incrementing the time count in S3, in S4, the parking brake control apparatus 24 determines whether a mask time has elapsed since the start of the application. In other words, in S4, the parking brake control apparatus 24 determines whether the time counted in S3 exceeds the mask time. The mask time is set to a time longer than a time until the convergence of the inrush current immediately after the power supply to the electric motor 7A and shorter than a time since the start of the driving of the electric motor 7A to the arrival at the target thrust force so as to allow the completion of the application to be determined at an appropriate timing. The mask time is determined from a desk calculation or an experiment in advance. In S3 and S4, the parking brake control apparatus 24 may determine that the inrush current is converged using the magnitude of the current value monitored in real time or a change in the current value over time instead of the mask time.

If "NO" is determined in S4, i.e., the current mask time is determined not to have elapsed since the start of the application (the output of the application instruction), the processing proceeds to RETURN. On the other hand, if "YES" is determined in S4, i.e., the current mask time is determined to have elapsed since the start of the application (the output of the application instruction), the processing proceeds to S5. In S5, the parking brake control apparatus 24 stores (acquires) the current value (the monitored value I of the motor current) and the voltage value (the monitored value V of the voltage between the motor terminals) of the electric motor 7A in the present control cycle. In this case, filter processing is performed on the current value and the voltage value.

In subsequent S6, the parking brake control apparatus 24 calculates the rotational speed $\omega$ of the electric motor 7A using the monitored value I of the motor current and the monitored value V of the voltage between the motor terminals stored in S5. The rotational speed $\omega$ is calculated based on the above-described equation 1 using a back electromotive force constant Ke and the motor resistance value R (this may include a resistance value of an electric wire from a location where the voltage is monitored to the electric motor 7A) of the electric motor 7A. The back electromotive force constant Ke and the motor resistance value R may be preset or may be estimated based on the motor current and the motor voltage. Alternatively, the rotational speed $\omega$ may be directly measured using a rotational sensor.

In S7, the parking brake control apparatus 24 determines the rotational acceleration $\omega'$ of the electric motor 7A based on the rotational speed $\omega$ of the electric motor 7A determined in S6. The rotational acceleration $\omega'$ is determined by being calculated like the above-described calculation 2 using the calculated value $\omega_n$ of the rotational acceleration $\omega$ in the present control cycle, the calculated value $\omega_n$ in the previous control cycle, and the control cycle $\Delta T$. After calculating the rotational acceleration $\omega$ in S6 and calculating the rotational acceleration $\omega'$ in S7, in subsequent S8, the parking brake control apparatus 24 determines the target current threshold value I, which is the current threshold value for stopping the electric motor 7A. In other words, in S8, the parking brake control apparatus 24 determines the current threshold value corresponding to the target thrust force using the rotational speed $\omega$ and the rotational acceleration $\omega'$ of the electric motor 7A determined in S6 and S7, respectively, i.e., the target current threshold value I after the correction based on the rotational speed $\omega$ and the rotational acceleration $\omega'$ at the present moment.

The target current threshold value I is calculated based on the above-described equation 3 using the target thrust force F, the thrust force loss $F_{LOSS}$, the mechanical efficiency $\gamma$ when the rotational motion is converted into the linear motion, the speed reduction ratio $n_{GR}$, the speed reducer efficiency $\eta_{GR}$, the inertia J of the rotational system, the viscosity coefficient c, the back electromotive force constant Kt, and the current monitoring error $\alpha$, besides the rotational speed $\omega$ and the rotational acceleration $\omega'$. Now, the target thrust force F is a thrust force required to keep the vehicle stopped. The target thrust force F may be determined in advance based on the vehicle specifications and an expected slope on which the vehicle is stopped, or may be determined by detecting a slope on which the vehicle is stopped using, for example, a longitudinal acceleration sensor and calculating the target thrust force F based on the magnitude of the slope estimated therefrom. The thrust force loss $F_{LOSS}$ is, for example, a loss such as sliding resistance of the piston (the pistons 6D) of the brake caliper (the caliper 6B). This is determined based on a desk calculation or an experiment in advance.

The mechanical efficiency $\gamma$ when the rotational motion is converted into the linear motion is a mechanical transmission ratio of the actuation portion, and is a ratio between an input torque and an output thrust force of the screw mechanism (the rotation-linear motion conversion mechanism 8) that generates the thrust force in the present system. This value is determined from a desk calculation or an experiment in advance. The speed reduction ratio $n_{GR}$ is a speed reduction ratio of the speed reducer from the electric motor 7A to the conversion of the rotational motion into the linear motion. This value is determined based on the gear configuration. The speed reducer efficiency $\eta_{GR}$ is a ratio between an input torque and an output torque of the speed reducer in consideration of a loss such as the meshed engagement of the speed reducer, a loss due to a sliding movement, and the viscosity of the grease. The inertia J of the rotational system is a value required to determine the torque according to the calculated rotational acceleration $\omega'$, and is the inertia of the armature, the gear, and the screw of the electric motor 7A (the electric actuator 7). They are calculated or measured from the shape and the mass density in advance. The viscosity coefficient c is the viscosity coefficient of the grease. The viscosity coefficient c is a predetermined value, and can be determined by an actual measurement or a calculation based on the relationship between the rotational speed and the resistance torque in advance.

According to the above-described equation 3, the required thrust force is calculated from the target thrust force F and the thrust force loss $F_{LOSS}$. In other words, "(F - $F_{LOSS}$)" in the parentheses in the equation 3 corresponds to the required thrust force. Then, in the above-described equation 3, the required torque is calculated using the required thrust force, the mechanical efficiency $\gamma$ when the rotational motion is converted into the linear motion, the speed reduction ratio $n_{GR}$, the speed reducer efficiency $\eta_{GR}$, the rotational acceleration $\omega'$, the inertia J, the rotational speed co, and the viscosity coefficient c. In other words, "{.....}" in the curly brackets in the equation 3 corresponds to the required torque. In the required torque, a change in the torque according to the rotational acceleration $\omega'$ and the rotational speed $\omega$ are taken into consideration, and therefore a variation in the thrust force according to the rotational state of the electric motor 7A can be corrected. Then, the target current threshold value I can be determined from the required torque and the back electromotive force constant kt. Because an error may occur when the current is monitored, the monitoring error $\alpha$ is taken into consideration in the monitored current.

In S9 subsequent to S8, the parking brake control apparatus 24 determines whether the target current threshold value I determined in S8 falls within the predetermined correction range. The correction range is preset so as to prevent an excessive or insufficient thrust force from being generated when the target current threshold value I is calculated as an excessive or insufficient value. For example, the correction range is set to 9.0 [A] to 11.0 [A]. If "YES" is determined in S9, i.e., the target current threshold value I is determined to fall within the correction range, the target current threshold value I determined in S8, i.e., the current threshold value after the correction is selected. In other words, in S10, the corrected current threshold value (the target current threshold value I determined in S8) is selected. On the other hand, if "NO" is determined in S9, i.e., the target current threshold value I is determined not to fall within the correction range, the preset predetermined value It is selected instead of the target current threshold value I determined in S8. In other words, in S 11, the uncorrected current threshold value (the preset predetermined value It) is selected.

The predetermined value It is preset as a value that does not lead to an excessive or insufficient thrust force as the target current value for stopping the driving of the electric motor 7A. In S12 subsequent to S10 or S 11, the parking brake control apparatus 24 compares the present monitored current and the selected current threshold value (the target current threshold value I or the predetermined value It), and determines whether now is the time to stop the electric motor 7A. In other words, in S 12, the parking brake control apparatus 24 determines whether the monitored current is greater than the current threshold value. If "NO" is determined in S 12, i.e., the monitored current is determined to be smaller than the current threshold value, the processing proceeds to RETURN. On the other hand, if "YES" is determined in S 12, i.e., the monitored current is determined to be equal to or greater than the current threshold value, the processing proceeds to S13 and S 14. In other words, in this case, an application completion flag is set to ON in S 13 because the monitored current reaches the current threshold value. Further, the counter in S3 is reset. Subsequently, in S14, the power supply to the electric motor 7A is stopped. Then, the processing proceeds to RETURN.

In this manner, according to the embodiment, the parking brake control apparatus 24 changes the target current threshold value I for stopping the driving of the electric motor 7A according to the rotational acceleration $\omega'$ of the electric motor 7A when holding the braking force. In other words, the parking brake control apparatus 24 changes the target current threshold value I for stopping the driving of the electric motor 7A according to the rotational acceleration $\omega'$ of the electric motor 7A. In sum, the parking brake control apparatus 24 includes the torque calculation portion, the torque correction portion, and the target current determination portion. In this case, the target current determination portion calculates the target current threshold value I for stopping the driving of the electric motor 7A according to the output from the torque correction portion, which corrects the torque of the electric motor 7A that is determined by the torque calculation portion based on the rotational acceleration $\omega'$ of the electric motor 7A.

Therefore, the target current threshold value I can be corrected according to the rotational acceleration $\omega'$, which varies according to the voltage applied to the electric motor 7A. Due to that, a variation in the thrust force generated based on the driving of the electric motor 7A can be suppressed. In other words, the driving of the electric motor 7A can be accurately stopped with a desired thrust force, and the generation of a proper thrust force can be achieved. As a result, the maximum thrust force can be reduced, and a size reduction and a cost reduction can be achieved.

In addition, according to the embodiment, the target current threshold value I is changed according to the rotational speed $\omega$ and the rotational acceleration $\omega'$ of the electric motor 7A. Therefore, the target current threshold value I can be corrected according to the rotational acceleration $\omega'$ and the rotational speed $\omega$ instead of being corrected according to the rotational acceleration $\omega'$ alone. As a result, the generation of a further proper thrust force can be achieved. In addition, in the embodiment, the rotational speed $\omega$ and the rotational acceleration $\omega'$ are determined based on the voltage of the electric motor 7A. This means that the rotational speed $\omega$ and the rotational acceleration $\omega'$ of the electric motor 7A can be determined even without use of a rotational sensor.

The embodiment has been described citing the configuration that changes the target current threshold value I according to the rotational speed $\omega$ and the rotational acceleration $\omega'$ of the electric motor 7A by way of example. However, without being limited thereto, for example, the parking brake control apparatus may be configured to change the target current threshold value I according to the rotational acceleration $\omega'$ without use of the rotational speed $\omega$. In other words, the target current threshold value I may be calculated using the following equation 7. In this case, the calculation is adjusted in such a manner that the maximum value of the viscosity coefficient c is included in the speed reducer efficiency

$\eta_{GR}$.

[Equation 7]

$$I = \left\{ (F - F_{Loss}) \frac{1}{\gamma} \cdot \frac{1}{n_{GR}} \cdot \frac{1}{\eta_{GR}} + J\dot{\omega} \right\} \frac{1}{K_t} \cdot \alpha$$

The embodiment has been described citing the example in which the hydraulic disk brake equipped with the electric parking brake function is employed as the rear wheel-side disk brake 6, and, along therewith, the hydraulic disk brake unequipped with the electric parking brake function is employed as the front wheel-side disk brake 5. However, the rear wheel-side disk brake 6 and the front wheel-side disk brake 5 are not limited thereto, and, for example, the hydraulic disk brake unequipped with the electric parking brake function may be employed as the rear wheel-side disk brake 6, and, along therewith, the hydraulic disk brake equipped with the electric parking brake function may be employed as the front wheel-side disk brake 5. Alternatively, the hydraulic disk brake equipped with the electric parking brake function may be employed as both the front wheel-side disk brake 5 and the rear wheel-side disk brake 6. In sum, the brakes on at least a pair of left and right wheels, among the wheels of the vehicle, can be constituted by the electric parking brake.

The embodiment has been described citing the hydraulic disk brake 6 equipped with the electric parking brake as the electric brake mechanism by way of example. However, the electric brake mechanism is not limited to the disk brake-type brake mechanism, and may be configured as a drum brake-type brake mechanism. Further examples of the configuration employable as the electric parking brake include various types such as a drum-in disk brake in which a drum-type electric parking brake is provided to a disk brake, and a configuration that holds a parking brake by pulling a cable using an electric motor.

Possible configurations as the electric parking brake apparatus and the brake control apparatus based on the above-described embodiment include the following examples.

As a first configuration, an electric parking brake apparatus includes an electric motor configured to drive an electric mechanism configured to press a braking member against a braking target member and hold a braking force, and a control apparatus configured to control driving of the electric motor. The control apparatus stops the driving of the electric motor when a current value of the electric motor reaches a target current threshold value for stopping the driving of the electric motor when holding the braking force, and changes the target current threshold value according to a rotational acceleration of the electric motor.

According to this first configuration, the target current threshold value for stopping the driving of the electric motor is changed according to the rotational acceleration of the electric motor when the braking force is held. Therefore, the target current threshold value can be corrected according to the rotational acceleration, which varies according to the voltage applied to the electric motor. Due to that, a variation in the thrust force generated based on the driving of the electric motor can be suppressed. In other words, the driving of the electric motor can be accurately stopped with a desired thrust force, and the generation of a proper thrust force can be achieved. As a result, the maximum thrust force can be reduced, and a size reduction and a cost reduction can be achieved.

As a second configuration, in the first configuration, the control apparatus changes the target current threshold value according to a rotational speed and the rotational acceleration of the electric motor. According to this second configuration, the target current threshold value can be corrected according to the rotational acceleration and the rotational speed instead of being corrected according to the rotational acceleration alone. As a result, the generation of a further proper thrust force can be achieved.

As a third configuration, in the second configuration, the control apparatus determines the rotational speed and the rotational acceleration based on a voltage of the electric motor. According to this third configuration, the rotational speed and the rotational acceleration of the electric motor can be determined even without use of a rotational sensor.

As a fourth configuration, an electric parking brake apparatus includes an electric motor configured to drive an electric mechanism configured to press a braking member against a braking target member and hold a braking force, and a control apparatus configured to control driving of the electric motor. The control apparatus includes a torque calculation portion configured to calculate a torque of the electric motor required to hold the braking force, a torque correction portion configured to correct the torque of the electric motor that is determined by the torque calculation portion based on a rotational acceleration of the electric motor, and a target current determination portion configured to calculate a target current threshold value for stopping the driving of the electric motor according to an output of the torque correction portion.

According to this fourth configuration, the target current determination portion calculates the target current threshold value for stopping the driving of the electric motor according to the output from the torque correction portion, which corrects the torque of the electric motor that is determined by the torque calculation portion based on the rotational acceleration of the electric motor. Therefore, the target current threshold value can be corrected according to the rotational acceleration, which varies according to the voltage applied to the electric motor. Due to that, a variation in the thrust force generated based on the driving of the electric motor can be suppressed. In other words, the driving of the electric motor can be accurately stopped with a desired thrust force, and the generation of a proper thrust force can be achieved. As a result, the maximum thrust force can be reduced, and a size reduction and a cost reduction can be achieved.

As a fifth configuration, a brake control apparatus is configured to stop driving of an electric motor when a current value of the electric motor reaches a target current threshold value for stopping the driving of the electric motor, when driving the electric motor to press a braking member against a braking target member and hold a braking force. The brake control apparatus changes the target current threshold value according to a rotational acceleration of the electric motor.

According to this fifth configuration, the target current threshold value is changed according to the rotational acceleration of the electric motor. Therefore, the target current threshold value can be corrected according to the rotational acceleration, which varies according to the voltage applied to the electric motor. Due to that, a variation in the thrust force generated based on the driving of the electric motor can be suppressed. In other words, the driving of the electric motor can be accurately stopped with a desired thrust force, and the generation of a proper thrust force can be achieved. As a result, the maximum thrust force can be reduced, and a size reduction and a cost reduction can be achieved.

REFERENCE SIGNS LIST

| 4 | disk rotor (braking target member) |
| 6 | rear wheel-side disk brake |
| 6C | brake pad (braking member) |
| 7A | electric motor (electrically-driven motor or electric mechanism) |
| 8 | rotation-linear motion conversion mechanism (electric mechanism) |
| 24 | parking brake control apparatus (control apparatus or brake control apparatus) |

**Claims**

1. An electric parking brake apparatus comprising:

   an electric motor configured to drive an electric mechanism, the electric mechanism being configured to press a braking member against a braking target member and hold a braking force; and
   a control apparatus configured to control driving of the electric motor,
   wherein the control apparatus
   stops the driving of the electric motor when a current value of the electric motor reaches a target current threshold value for stopping the driving of the electric motor when holding the braking force, and
   changes the target current threshold value according to a rotational acceleration of the electric motor.

2. The electric parking brake apparatus according to claim 1, wherein the control apparatus changes the target current threshold value according to a rotational speed and the rotational acceleration of the electric motor.

3. The electric parking brake apparatus according to claim 2, wherein the control apparatus determines the rotational speed and the rotational acceleration based on a voltage of the electric motor.

4. An electric parking brake apparatus comprising:

   an electric motor configured to drive an electric mechanism, the electric mechanism being configured to press a braking member against a braking target member and hold a braking force; and
   a control apparatus configured to control driving of the electric motor,
   the control apparatus including
   a torque calculation portion configured to calculate a torque of the electric motor required to hold the braking force,
   a torque correction portion configured to correct the torque of the electric motor that is determined by the torque calculation portion based on a rotational acceleration of the electric motor, and
   a target current determination portion configured to calculate a target current threshold value for stopping the driving of the electric motor according to an output of the torque correction portion.

5. A brake control apparatus, the brake control apparatus being configured to stop driving of an electric motor when a current value of the electric motor reaches a target current threshold value for stopping the driving of the electric motor, when driving the electric motor to press a braking member against a braking target member and hold a braking force,
wherein the brake control apparatus changes the target current threshold value according to a rotational acceleration of the electric motor.

Fig. 1

Fig. 2

Fig. 3

# Fig. 4

```
                    ┌─────────────┐
                    │    START    │
                    └─────────────┘
                          │           S1
         NO      ╱─────────────────────╲
      ┌─────────<  IS APPLICATION STARTED?  >
      │          ╲─────────────────────╱
      │                  YES
      │                   │           S2
      │          ┌─────────────────────────┐
      │          │  SUPPLY POWER TO MOTOR IN │
      │          │    APPLICATION DIRECTION  │
      │          └─────────────────────────┘
      │                   │           S3
      │          ┌─────────────────────────┐
      │          │   INCREMENT APPLICATION  │
      │          │        TIME COUNT        │
      │          └─────────────────────────┘
      │                   │           S4
      │  NO     ╱─────────────────────╲
      │◄───────< HAS MASK TIME ELAPSED? >
      │         ╲─────────────────────╱
      │                  YES
```

$S5$ ACQUIRE MOTOR CURRENT I AND MOTOR VOLTAGE V, AND PERFORM FILTER PROCESSING

$S6$ CALCULATE ROTATIONAL SPEED (EQUATION 1)

$$\omega = (V - RI) / K_e$$

$S7$ CALCULATE ROTATIONAL ACCELERATION (EQUATION 2)

$$\omega' = (\omega_n - \omega_{n-1}) / \Delta T$$

$S8$ CALCULATE CURRENT THRESHOLD VALUE (EQUATION 3)

$$I = \{(F - F_{Loss}) \frac{1}{\gamma} \cdot \frac{1}{n_{GR}} \cdot \frac{1}{\eta_{GR}} + J\omega' + c\omega\} \frac{1}{K_t} \cdot \alpha$$

$S9$ DOES CURRENT THRESHOLD VALUE FALL WITHIN CORRECTION RANGE? — NO / YES

$S10$ CORRECTED CURRENT THRESHOLD VALUE

$S11$ UNCORRECTED CURRENT THRESHOLD VALUE

$S12$ CURRENT THRESHOLD VALUE ≤ MONITORED CURRENT? — NO / YES

$S13$ SET APPLICATION COMPLETION FLAG TO ON

$S14$ STOP POWER SUPPLY TO MOTOR

```
                    ┌─────────────┐
                    │     END     │
                    └─────────────┘
```

## INTERNATIONAL SEARCH REPORT

| | International application No. |
|---|---|
| | **PCT/JP2021/038292** |

### A. CLASSIFICATION OF SUBJECT MATTER

***B60T 13/74***(2006.01)i
FI:  B60T13/74 G

According to International Patent Classification (IPC) or to both national classification and IPC

### B. FIELDS SEARCHED

Minimum documentation searched (classification system followed by classification symbols)

B60T13/74

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-1596 A (NTN CORP.) 09 January 2020 (2020-01-09)<br>entire text, all drawings | 1-5 |
| A | CN 112810595 A (HUNAN CRRC SPECIAL ELECTRIFICATION EQUIPMENT CO., LTD.) 18 May 2021 (2021-05-18)<br>entire text, all drawings | 1-5 |
| A | WO 2020/188850 A1 (HITACHI AUTOMOTIVE SYSTEMS LTD.) 24 September 2020 (2020-09-24)<br>entire text, all drawings | 1-5 |
| A | WO 2020/090376 A1 (HITACHI AUTOMOTIVE SYSTEMS LTD.) 07 May 2020 (2020-05-07)<br>entire text, all drawings | 1-5 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/038292**

| Patent document cited in search report | | | Publication date (day/month/year) | Patent family member(s) | | | Publication date (day/month/year) |
|---|---|---|---|---|---|---|---|
| JP | 2020-1596 | A | 09 January 2020 | (Family: none) | | | |
| CN | 112810595 | A | 18 May 2021 | (Family: none) | | | |
| WO | 2020/188850 | A1 | 24 September 2020 | JP | 2020-152175 | A | |
| | | | | entire text, all drawings | | | |
| WO | 2020/090376 | A1 | 07 May 2020 | JP | 2020-69948 | A | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019130939 A